# EUROPEAN PATENT APPLICATION

(11) **EP 3 096 265 A2**
(43) Date of publication of application: **23.11.2016**
(21) Application number: 16170518.1
(22) Date of filing: 20.05.2016
(51) Int. Cl.: G06K 9/00, G01C 21/32, G01C 21/36, G08G 1/01, G08G 1/0962, G08G 1/0967

(54) **METHODS AND DEVICES FOR PROCESSING TRAFFIC DATA**

(30) Priority: 22.05.2015 CN 201510268273
(71) Applicant: Xiaomi Inc., Beijing 100085 (CN)
(72) Inventor: GAO, Yi, 100085 BEIJING (CN); GE, Yunyuan, 100085 BEIJING (CN); WANG, Zhengan, 100085 BEIJING (CN)
(74) Representative: Fontenelle, Sandrine

(57) **Abstract**

The present disclosure relates to methods and devices for processing traffic data. The method includes: acquiring (101) a current location of a vehicle in traveling; if the current location is not a preset roadblock location, monitoring (103) a variation amount of a preset blocking parameter when the vehicle is in the current location; and when the variation amount of the preset blocking parameter exceeds a preset range, sending (105) the current location and the variation amount of the preset blocking parameter to a preset server. Through the method, drivers can in real time learn about accurate information about roadblocks ahead, and can response in advance to lower the traveling speeds or make a bypass.

## Description

### TECHNICAL FIELD

The present disclosure generally relates to the field of vehicle technology, and more particularly, to methods and devices for processing traffic data.

### BACKGROUND

During traveling, a driver inevitably encounters a poor road condition, such as a damaged road surface, road construction, road obstructions, etc. These factors of influencing normal traveling of a vehicle can be collectively referred to as roadblocks. When a vehicle is traveling fast or with poor ambient light, if a roadblock exists in the road ahead and the driver fails to appropriately slow down or steer away, it will probably cause wearing of tires or even a traffic accident. Accordingly, it is important for the safety of the driver and the vehicle to learn about locations of roadblocks in advance.

Currently, a location of a roadblock is generally informed to a driver through a traffic radio station. For example, if a driver finds a roadblock in a road ahead, he can dial a hotline of a traffic radio station and describes the location, the type and other situations of the roadblock. Then, the traffic radio station broadcasts the situations of the roadblock to other drivers who are listening to the traffic radio station, to alert the drivers who are approaching the location of the roadblock to slow down or pay more attention in advance, so as to avoid bad influence of the roadblock on the normal traveling of the vehicle.

However, when he encounters a roadblock, not all of the drivers will inform other drivers of the roadblock through a traffic radio station, and not all of the drivers will be just listening to the traffic radio station. Therefore, many roadblocks are not known to every driver. On the other hand, in case where a driver once learns about a roadblock through a traffic radio station or once personally comes across a roadblock, but the roadblock is currently cleared off, the driver will nevertheless consider that the roadblock still exists and will thus select another road to bypass it. This will unnecessarily prolong the traveling time and if the driver is not familiar to another road, it will become difficult for him to arrive at the destination.

### SUMMARY

In order to solve the problem in the related art, embodiments of the present disclosure provide methods and devices for processing traffic data.

In order to solve the above technical problem, the embodiments of the present disclosure provide the following technical solution.

According to a first aspect, the invention relate to a method for processing traffic data, which is applied in a terminal, the method including:
acquiring a current location of a vehicle in traveling;
determining whether the current location is a preset roadblock location;
if the current location is not a preset roadblock location, monitoring a variation amount of a preset blocking parameter when the vehicle is in the current location and determining whether the variation amount of the preset blocking parameter exceeds a corresponding preset range; and
when the variation amount of the preset blocking parameter exceeds the preset range, sending the current location and the variation amount of the preset blocking parameter to a preset server.

In a particular embodiment, the method further includes:
when the current location is not a preset roadblock location and the variation amount of the preset blocking parameter exceeds the corresponding preset range, taking a time instant at which the vehicle is in the current location as a roadblock time instant;
acquiring roadblock data at the roadblock time instant, the roadblock data containing at least one of image data within a first preset time period before the roadblock time instant and image data within a second preset time period after the roadblock time instant; and sending the roadblock data to the preset server.

In a particular embodiment, the method further includes:
if the current location is a preset roadblock location, detecting a variation amount of a preset blocking parameter when the vehicle is in the current location and determining whether the variation amount of the preset blocking parameter does not exceed the corresponding preset range; and
when the variation amount of the preset blocking parameter does not exceed the corresponding preset range, sending the variation amount of the preset blocking parameter and the current location to the preset server.

In a particular embodiment, the method further includes:
acquiring a traveling route of the vehicle and sending the traveling route to the preset server;
receiving from the preset server, preset roadblock locations on the traveling route and corresponding to each of the preset roadblock locations on the traveling route, a preset range of a preset blocking parameter; and
presenting locally at the vehicle, all of the preset roadblock locations on the traveling route.

In a particular embodiment, the method further includes:
acquiring the traveling route of the vehicle;
marking on the traveling route, all of the preset roadblock locations on the traveling route; and
presenting locally at the vehicle, the traveling route marked with the preset roadblock locations.

In a particular embodiment, the method further includes:
receiving from a user an inquiry request for inquiring about a preset roadblock location on the traveling route;
sending the inquiry request to the preset server;
receiving roadblock data of the preset roadblock location which is searched out by the preset server based on the inquiry request; and
presenting the roadblock data of the preset roadblock location.

According to a second aspect, the invention relates to a method for processing traffic data, which is applied in a server, wherein the method includes:
receiving a current location and a variation amount of a preset blocking parameter which are sent by a first preset vehicle;
determining whether the current location corresponds to a location stored in a preset roadblock-location list in the server; and
when the current location does not correspond to a location stored in the preset roadblock-location list, taking the current location as a roadblock location, storing the variation amount of the preset blocking parameter locally in the server, and storing the current location in the preset roadblock-location list.

In a particular embodiment, the method further includes:
receiving a traveling route sent from a second preset vehicle;
determining whether a preset roadblock location exists on the traveling route; and
if a preset roadblock location exists on the traveling route, sending to the second preset vehicle each preset roadblock location on the traveling route and a preset range of a preset blocking parameter corresponding to each preset roadblock location on the traveling route.

In a particular embodiment, the method further includes:
when the current location corresponds to a location stored in the preset roadblock-location list, taking the preset roadblock-location in the preset roadblock-location list which corresponds to the current location as a non-roadblock location.

In a particular embodiment, the method further includes:
when taking the current location as a roadblock location, receiving roadblock data of the roadblock location from the first preset vehicle, the roadblock data at least containing image data of the roadblock location; and
storing the roadblock data locally in the server.

In a particular embodiment, the method further includes:
receiving an inquiry request with respect to a preset roadblock location from a second preset vehicle;
searching for roadblock data corresponding to the preset roadblock location locally in the server; and
sending the roadblock data corresponding to the preset roadblock location to the second preset vehicle.

In a particular embodiment, the first preset vehicle and the second preset vehicle are the same vehicle.

According to a third aspect, the invention relates to a terminal for processing traffic data, wherein the terminal includes:
a vehicle-location acquiring unit configured to acquire a current location of a vehicle in traveling;
a roadblock-location determining unit configured to determine whether the current location is a preset roadblock location;
a parameter-variation-amount monitoring unit configured to, if the current location is not a preset roadblock location, monitor a variation amount of a preset blocking parameter when the vehicle is in the current location;
a first parameter-variation-amount determining unit configured to determine whether the variation amount of the preset blocking parameter exceeds a corresponding preset range; and
a first sending unit configured to, when the variation amount of the preset blocking parameter exceeds the preset range, send the current location and the variation amount of the preset blocking parameter to a preset server.

In a particular embodiment, the terminal further includes:
a roadblock-time-instant acquiring unit configured to, when the current location is not a preset roadblock location and the variation amount of the preset blocking parameter exceeds the corresponding preset range, take a time instant at which the vehicle is in the current location as a roadblock time instant;
a roadblock-data acquiring unit configured to acquire roadblock data at the roadblock time instant, the roadblock data containing at least one of image data within a first preset time period before the roadblock time instant and image data within a second preset time period after the roadblock time instant; and
a roadblock-data sending unit configured to send the roadblock data to the preset server.

In a particular embodiment, the terminal further includes:
a parameter-variation-amount detecting unit configured to, if the current location is a preset roadblock location, detect a variation amount of a preset blocking parameter when the vehicle is in the current location;
a second parameter-variation-amount determining unit configured to detect whether the variation amount of the preset blocking parameter does not exceed the corresponding preset range; and
a second sending unit configured to, when the variation amount of the preset blocking parameter does not exceed the corresponding preset range, send the variation amount of the preset blocking parameter and the current location to the preset server.

In a particular embodiment, the terminal further includes:
a traveling-route acquiring unit configured to acquire a traveling route of the vehicle and send the traveling route to the preset server;
a roadblock-location receiving unit configured to receive from the preset server, preset roadblock locations on the traveling route and corresponding to each of the preset roadblock locations on the traveling route, a preset range of a preset blocking parameter; and
a presenting unit configured to present locally at the vehicle, all of the preset roadblock locations on the traveling route.

In a particular embodiment, the presenting unit further includes:
a traveling-route acquiring sub-unit configured to acquire the traveling route of the vehicle;
a traveling-route marking sub-unit configured to mark on the traveling route, all of the preset roadblock locations on the traveling route; and
a traveling-route presenting sub-unit configured to present locally at the vehicle, the traveling route marked with the preset roadblock locations.

In a particular embodiment, the terminal further includes:
a roadblock inquiring unit configured to receive from a user an inquiry request for inquiring about a preset roadblock location on the traveling route;
an inquiry-request sending unit configured to send the inquiry request to the preset server;
a roadblock-data receiving unit configured to receive roadblock data of the preset roadblock location which is searched out by the preset server based on the inquiry request; and
a roadblock-data presenting unit configured to present the roadblock data of the preset roadblock location.

According to a fourth aspect, the invention relates to a server including:
a receiving unit configured to receive a current location and a variation amount of a preset blocking parameter which are sent by a first preset vehicle;
a roadblock-location determining unit configured to determine whether the current location corresponds to a location stored in a preset roadblock-location list in the server;
a roadblock marking unit configured to, when the current location does not correspond to a location stored in the preset roadblock-location list, take the current location as a roadblock location; and
a storing unit configured to store the variation amount of the preset blocking parameter locally in the server, and store the current location in the preset roadblock-location list.

In a particular embodiment, the server further includes:
a traveling-route receiving unit configured to receive a traveling route sent from a second preset vehicle;
a roadblock-location determining unit configured to determine whether a preset roadblock location exists on the traveling route; and
a roadblock-location sending unit configured to, if a preset roadblock location exists on the traveling route, send to the second preset vehicle each preset roadblock location on the traveling route and a preset range of a preset blocking parameter corresponding to each preset roadblock location on the traveling route.

In a particular embodiment, the server further includes:
a non-roadblock-location marking unit configured to, when the current location corresponds to a location stored in the preset roadblock-location list, take the preset roadblock-location in the preset roadblock-location list which corresponds to the current location as a non-roadblock location.

In a particular embodiment, the server further includes:
a roadblock-data receiving unit configured to, when the current location is taken as a roadblock location, receive roadblock data of the roadblock location from the first preset vehicle, the roadblock data at least containing image data of the roadblock location; and
a roadblock-data storing unit configured to store the roadblock data locally in the server.

In a particular embodiment, the server further includes:
an inquiry-request receiving unit configured to receive an inquiry request with respect to a preset roadblock location from a second preset vehicle;
a roadblock-data searching unit configured to search for roadblock data corresponding to the preset roadblock location locally in the server; and
a roadblock-data sending unit configured to send the roadblock data corresponding to the preset roadblock location to the second preset vehicle.

In a particular embodiment, the first preset vehicle and the second preset vehicle are the same vehicle.

According to a another aspect, the invention also relates to a terminal including:
a processor; and
a memory for storing instructions executable by the processor;
wherein the processor is configured to perform:
acquiring a current location of a vehicle in traveling;
determining whether the current location of the vehicle is a preset roadblock location;
if the current location of the vehicle is not a preset roadblock location, monitoring a variation amount of a preset blocking parameter when the vehicle is in the current location and determining whether the variation amount of the preset blocking parameter exceeds a corresponding preset range; and
when the variation amount of the preset blocking parameter exceeds the preset range, sending the current location and the variation amount of the preset blocking parameter to a preset server.

According to a another aspect of embodiments of the present disclosure, there is provided a server including:
a processor; and
a memory for storing instructions executable by the processor;
wherein the processor is configured to perform:
receiving a current location and a variation amount of a preset blocking parameter which are sent by a first preset vehicle;
determining whether the current location corresponds to a location stored in a preset roadblock-location list in the server; and
when the current location does not correspond to a location stored in the preset roadblock-location list, taking the current location as a roadblock location, storing the variation amount of the preset blocking parameter locally in the server, and storing the current location in the preset roadblock-location list.

In one particular embodiment, the steps of at least one method of processing traffic data mentioned above (ie the method implemented in the terminal and/or the method implemented in the server) are determined by computer program instructions.

Consequently" the invention is also directed to a computer program for executing the steps of a method of processing traffic data when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a hard disk.

Alternatively, the information medium can be an integrated circuit in which the program is incorporated, the circuit being adapted to execute the method in question or to be used in its execution.

The technical solution according to embodiments of the present disclosure may have the following beneficial effects:
In the methods and devices provided by the embodiments of the present disclosure, the vehicle determines whether the current location is a preset roadblock location; when the current location of the vehicle is not a preset roadblock location, it is monitored a variation amount of a preset blocking parameter of the vehicle; if the variation amount of the preset blocking parameter exceeds a corresponding preset range, it is determined that the current location of the vehicle belongs to a roadblock location, and the current location of the vehicle and the variation amount of the preset blocking parameter are sent to a preset server; and after it receives the preset roadblock location, the preset server can send the preset roadblock location to a vehicle to inform the vehicle of the preset roadblock location.

In the methods and devices provided by the embodiments of the present disclosure, it can ensure the accuracy of the preset roadblock locations in the preset server, and the preset roadblock locations can be sent to vehicles. Thereby, drivers can in real time learn about accurate information about roadblocks ahead, and can response in advance to lower the traveling speeds or make bypass.

### BRIEF DESCRIPTION OF THE DRAWINGS

In order to illustrate the technical solutions of the embodiments of the present disclosure or the related art more clearly, a brief introduction may be given hereinafter to the accompanying drawings that may be used in the description of the embodiments or the related art. Apparently, other drawings may be obtained by those skilled in the art according to these drawings without paying any creative labor.
Fig. 1 is a flow chart illustrating a method for processing traffic data according to an exemplary embodiment;
Fig. 2 is a schematic diagram illustrating a vehicle traveling at a roadblock;
Fig. 3 is a flow chart illustrating a method for processing traffic data according to another exemplary embodiment;
Fig. 4 is a flow chart illustrating a method for processing traffic data according to still another exemplary embodiment;
Fig. 5 is a flow chart illustrating a method for processing traffic data according to still another exemplary embodiment;
Fig. 6 is a flow chart illustrating a method for processing traffic data according to still another exemplary embodiment;
Fig. 7 is a flow chart illustrating a method for processing traffic data according to still another exemplary embodiment;
Fig. 8 is a schematic diagram illustrating a preset roadblock location marked on a traveling route in a map;
Fig. 9 is a flow chart illustrating a method for processing traffic data according to still another exemplary embodiment;
Fig. 10 is a flow chart illustrating a method for processing traffic data according to still another exemplary embodiment;
Fig. 11 is a flow chart illustrating a method for processing traffic data according to still another exemplary embodiment;
Fig. 12 is a flow chart illustrating a method for processing traffic data according to still another exemplary embodiment;
Fig. 13 is a block diagram of a device for processing traffic data according to an exemplary embodiment;
Fig. 14 is a block diagram of a device for processing traffic data according to another exemplary embodiment;
Fig. 15 is a block diagram of a server according to an exemplary embodiment;
Fig. 16 is a block diagram of a terminal according to an exemplary embodiment; and
Fig. 17 is a block diagram of a server according to an exemplary embodiment.

### DETAILED DESCRIPTION

In order to for those skilled in the art to better understand the technical solutions of the present disclosure, the technical solutions of the present disclosure will be described more clearly and fully with reference to the accompanying drawings of the embodiments. It is apparent that, the described embodiments are only a part of but not all of the embodiments of the present disclosure. Based on the embodiments of the present disclosure, other embodiments obtained without paying any creative labor by one of ordinary skill in this art all belong to the protective scope of the present disclosure.

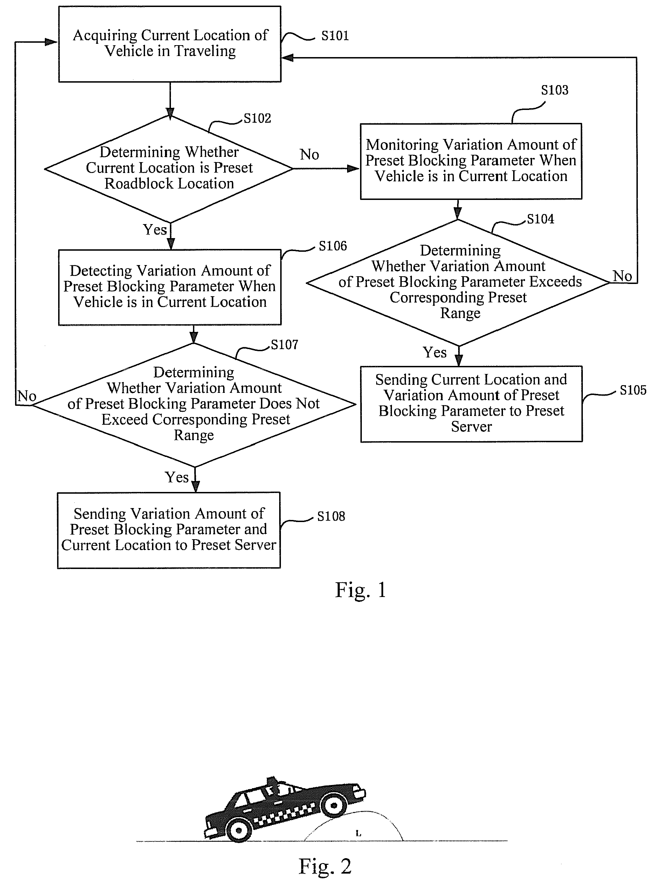

Fig. 1 is a flow chart illustrating a method for processing traffic data according to an exemplary embodiment, which is applied in a terminal installed onboard a vehicle. As shown in Fig. 1, the method includes the following steps.

In step S101, a current location of a vehicle in traveling is acquired.

A navigation device can be installed onboard the vehicle in advance, and the driver can find a route according to the navigation device. For a vehicle without a navigation device, the driver can carry a mobile phone, a tablet computer and the like which is installed with a navigation system, to find a route.

In the embodiment of the present disclosure, an onboard navigation device and a terminal installed with a navigation system can be collectively referred to as a navigation terminal. Generally, a navigation terminal has a positioning function and can acquire location data of the navigation terminal in real time. The location data can be latitude and longitude coordinates, or can be a geographical name such as a name of a street or a name of a residence community, etc.

The current location data, that is, the current location of the vehicle in traveling can be acquired through navigation. Thereby, the current location of the vehicle is acquired.

In step S102, it is determined whether the current location is a preset roadblock location.

Generally, information about a preset roadblock location can be loaded in the navigation terminal in advance. However, the information about the preset roadblock location can also be updated periodically.

In the embodiment of the present disclosure, after a preset roadblock location is acquired, the step of determining whether the current location is a preset roadblock location can be determining whether the current location is the same as the preset roadblock location. When it is determined that the current location is the same as the preset roadblock location, it is determined that the current location is the preset roadblock location, otherwise, it is determined that the current location is not the preset roadblock location

Since during the operation of the vehicle, the navigation may have errors, in this case, even if the vehicle practically travels at the preset roadblock location, the current location of the vehicle as acquired through the navigation may be not the same as the preset roadblock location. Then, in another embodiment of the present disclosure, the step of determining whether the current location is a preset roadblock location can also be determining whether the current location of the vehicle is within a preset range of the preset roadblock location, wherein the preset range can be a range centered at the preset roadblock location and having a radius of a preset distance (for example 1 meter). When the current location of the vehicle is within the range, it can be determined that the current location is the preset roadblock location, otherwise, it can be determined that the current location is not the preset roadblock location.

The vehicle can obtain a preset roadblock location which is sent from a server. Wherein, the server can send to the vehicle all preset roadblock locations in a district or a city where the vehicle is in. Alternatively, when the server learns about a traveling route of the vehicle, the server can send to the vehicle preset roadblock locations on the traveling route.

The current location of the vehicle in traveling acquired in step S101 is compared with each of the preset roadblock locations. When the current location of the vehicle is the same as any of the preset roadblock locations, alternatively, when the current location of the vehicle is within the preset range of the any of the preset roadblock locations, it can be determined that the current location of the vehicle is a preset roadblock location. Otherwise, it can be determined that the current location of the vehicle is not a preset roadblock location, and the process turns to step S103.

If the current location of the vehicle is not a preset roadblock location, in step S103, it is monitored a variation amount of a preset blocking parameter when the vehicle is in the current location.

For a vehicle, some preset blocking items can be set in advance, such as vehicle vibration, a steering wheel angle and an engine rotational speed. Correspondingly, the vehicle is installed with corresponding sensors which are disposed on the body of the vehicle, the steering wheel and the engine.

In order to collect these parameters, an on-board information system can be also installed onboard the vehicle in advance. The on-board information system is connected to these sensors, for acquiring the parameters collected by these sensors as preset blocking parameters, such as amplitude of vibration of the vehicle, a turning angle of the vehicle, etc.

The navigation terminal is connected to the on-board information system via cables or via wireless connection, such that the navigation terminal can acquire the preset blocking parameters from the on-board information system in real time. In the embodiment of the present disclosure, a preset blocking parameter refers to a combination of one or more parameters which indicates that the vehicle encounters a roadblock.

When the vehicle is in normal traveling, parameters of the body and the driving system of the vehicle will not dramatically change. When the vehicle encounters a roadblock, the above parameters will change significantly. Therefore, a variation amount of a preset blocking parameter can indicate whether the vehicle encounters a roadblock.

In the embodiment of the present disclosure, a variation amount of the vibration amplitude of the vehicle is described as an example.

The variation amount of the preset blocking parameter can be a difference between a current vibration amplitude of the vehicle and a vibration amplitude of the vehicle at a preset moment, for example, a difference between a current vibration amplitude of the vehicle and a vibration amplitude of the vehicle 1 second ago. The variation amount of the preset blocking parameter can also be a difference between a current vibration amplitude of the vehicle and a preset vibration amplitude of the vehicle. Herein, the preset vibration amplitude of the vehicle can be an average value of vibration amplitude of the vehicle traveling on a flat road. It can be determined whether the vehicle significantly changes by acquiring the variation amount of the preset blocking parameter.

In step S104, it is determined whether the variation amount of the preset blocking parameter exceeds a corresponding preset range.

As described in the above step S103, the preset blocking parameter can be a combination of one or more parameters. For any two different parameters, since they have different attributes or types, each of the preset blocking parameters will be set with a corresponding preset range. For example, vibration amplitude corresponds to a preset range [10, 20] of vibration amplitude.

When the variation amount of the preset blocking parameter is within the corresponding preset range, it means that the variation amount of the preset blocking parameter is in a reasonable range, that is, the vehicle is currently in normal traveling. When the variation amount of the preset blocking parameter exceeds the corresponding preset range, it means that the variation amount of the preset blocking parameter exceeds the set range, that is, the vehicle possibly currently encounters a roadblock in traveling. For example, as shown in Fig. 2, when the vehicle encounters a rather large bump, such that the vibration amplitude of the body of the vehicle is larger than a preset range of vibration amplitude.

For a plurality of preset blocking parameters, as long as any one of them has a variation amount exceeding a preset range, it can be considered that the vehicle encounters a roadblock. In addition, in order to avoid a problem that one certain parameter causes a high false alarm rate, two or more parameters can be considered in combination. For example, vibration amplitude and traveling speed of the vehicle can be considered in combination.

Since when the vehicle is traveling at a high speed, even a rock of a small volume can bring a considerable bump to the body of the vehicle, and when the vehicle is traveling at a low speed, a rock of the same volume will not bring a bump to the body of the vehicle, the traveling speed and the vibration amplitude is closely related. In another embodiment of the present disclosure, only when the traveling speed is larger than a preset threshold and the vibration amplitude exceeds a corresponding preset range, it can be determined that the vehicle encounters a roadblock.

When the variation amount of the preset blocking parameter exceeds the corresponding preset range, in step S105, the current location and the variation amount of the preset blocking parameter are sent to a server.

Since the current location of the vehicle is not a preset roadblock location, it means that the server does not take this location as a preset roadblock location. If at the current location, the variation amount of the preset blocking parameter exceeds the corresponding preset range, it means that the variation amount of the preset blocking parameter of the vehicle at the current location does not belong to an acceptable range of the variation amount of the parameter when the vehicle is in a normal traveling, and it can be considered that it encounters a roadblock.

However, the server did not take this location as a preset roadblock location and did not send it to the vehicle. Therefore, the current location of the vehicle and the variation amount of the preset blocking parameter at the current location of the vehicle are sent to the server, for the server to update information about preset roadblock locations and record this location as a roadblock location.

When the variation amount of the preset blocking parameter does not exceed the preset range, the process turns to step S101.

In the embodiment of the present disclosure, before the navigation terminal sends the current location of the vehicle and the variation amount of the preset blocking parameter to the server, the navigation terminal sends a voice inquiry or a textual inquiry "Whether encounters a roadblock?". The driver can select "yes" or "no" on the navigation terminal, or can reply a voice answer "yes" or "no", or can describe the roadblock such as "There is a deep pit about half a meter ahead". The navigation terminal can save the voice description of the roadblock from the driver, and obtain accurate information about the roadblock according to the selection of the driver or by recognizing the voice answer. After it is confirmed that the vehicle encounters a roadblock, the current location of the vehicle and the variation amount of the preset blocking parameter are sent to the server.

In the present embodiment, when the current location of the vehicle is not a preset roadblock location, a variation amount of a preset blocking parameter of the vehicle is monitored. If the variation amount of the preset blocking parameter exceeds the preset range, it means that a roadblock exists at the preset roadblock location and the server did not inform the terminal that this location is a preset roadblock location. Therefore, it means that the server does not take this location as a preset roadblock location, then the vehicle sends the current location and the variation amount of the preset blocking parameter at the current location of the vehicle to the server, for the server to update data of roadblock locations.

Through the method disclosed by the present embodiment, real-time information about roadblocks on a road can be learned about according to locations of the vehicle and variation amounts of a preset blocking parameter of the vehicle, and the real-time information is sent to a server for the server to update information about roadblock locations and send more accurate information about preset roadblock locations to vehicles.

After a preset roadblock location is repaired, the server does not learn about updated information about this preset roadblock location. Therefore, in another embodiment of the present disclosure, as shown in Fig. 1, the method also includes the following steps.

When the current location of the vehicle is a preset roadblock location, in step S106, a variation amount of a preset blocking parameter when the vehicle is in the current location is detected.

In the above step S102, if it is determined that the current location of the vehicle is a preset roadblock location, a preset blocking parameter when the vehicle is in the current location is acquired through the on-board information system. Wherein, acquiring a preset blocking parameter can be referred to the above step S103, it can be acquiring a preset blocking parameter of the vehicle through the on-board information system and then acquiring a variation amount of the preset blocking parameter.

In step S107, it is determined whether the variation amount of the preset blocking parameter does not exceed the corresponding preset range.

Determining whether the variation amount of the preset blocking parameter does not exceed the corresponding preset range can be referred to the above step S104. If it is determined that the variation amount of the preset blocking parameter does not exceed the corresponding preset range, the process turns to step S108; and if it is determined that the variation amount of the preset blocking parameter exceeds the corresponding preset range, the process turns to step S101.

For example, as shown in Fig. 2, when the road surface on which the vehicle is traveling has a steep sink or the road surface is uneven, or the vehicle is rolling on an obstacle, a bump will occur to the vehicle, causing a sudden increase of the vibration amplitude of the vehicle. At 1 second before the vehicle is traveling at a current location L, the vibration amplitude of the vehicle is 20, and when the vehicle is traveling at the current location L, the vibration amplitude is 100. Then, it can be calculated that the variation amount of the vibration amplitude of the vehicle is 80. Assuming that the preset range corresponding to the variation amount of the vibration amplitude is [10, 20], the variation amount of the vibration amplitude of the vehicle when the vehicle is at the current location L exceeds the preset range. The process turns to step S101, to acquire a current location of the vehicle in traveling and then the subsequent steps.

When the variation amount of the preset blocking parameter does not exceed the corresponding preset range, in step S108, the variation amount of the preset blocking parameter and the current location are sent to the server.

Since the preset roadblock location was sent to the vehicle by the server, when the current location of the vehicle is the same with the preset roadblock location recorded in the server, the current location of the vehicle is considered by the server as a roadblock location. While if the acquired variation amount of the vibration amplitude of the vehicle at the current moment is within the preset range, it means that the variation amount of the vibration amplitude of the vehicle at the current location belongs to the acceptable rage of the variation amount of the parameter when the vehicle is in normal traveling. Therefore, it can be considered that the roadblock has been cleared off, and the current location of the vehicle does not belong to a roadblock location.

In this regard, the current location of the vehicle and the variation amount of the preset blocking parameter at the current location of the vehicle are sent to the server, for the server to update the information about the preset roadblock locations.

In the present embodiment, a process in which the vehicle is arriving at a preset roadblock location is described. The vehicle acquires a preset roadblock location from the server; when the vehicle travels at the preset roadblock location, it is monitored variation amount of the preset blocking parameter of the vehicle; if the variation amount of the preset blocking parameter exceeds the preset range, it means that a roadblock still exists at the preset roadblock location; and if the variation amount of the preset blocking parameter does not exceed the preset range, it means that no roadblock exists at the preset roadblock location and the server still considers this location as a roadblock location, then the vehicle sends the current location and the variation amount of the preset blocking parameter at this location to the server for the server to update the data of the roadblock locations.

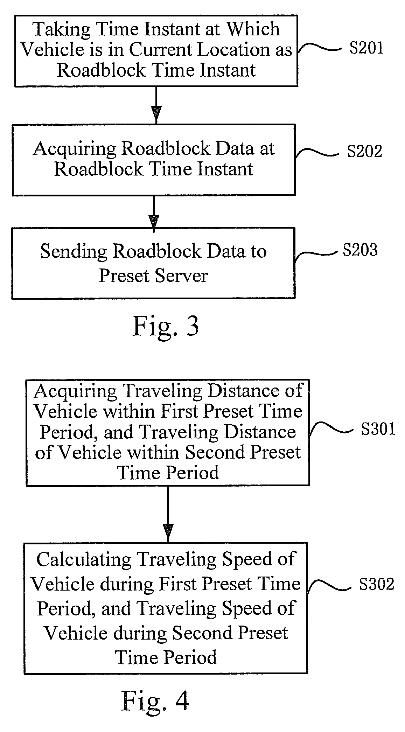

In the above embodiments, when the vehicle encounters a roadblock, the vehicle only sends to the server the current location of the vehicle and the variation amount of the preset blocking parameter at the current location of the vehicle. However, these are not enough for a driver to clearly learn about the roadblock and the ambient environment. In this regard, in another embodiment of the present disclosure, as shown in Fig. 3, when the current location of the vehicle is not a preset roadblock location and after the variation amount of the preset blocking parameter exceeds the corresponding preset range, the method also includes the following steps.

In step S201, a time instant at which the vehicle is in the current location is taken as a roadblock time instant.

When the current location of the vehicle is not a preset roadblock location, it means that the current location is considered as a normal road condition for the server and the whole system.

Once it is determined that the variation amount of the preset blocking parameter exceeds the corresponding preset range, it means that the current location has not be recorded by the server as a preset roadblock location.

In this case, it is a situation where the current location should be recorded as a preset roadblock location.

Then, in the present step, the time instant at which the vehicle is in the current location is taken as a roadblock time instant. For example, a vehicle is traveling at an intersection between Anding Road and North Tucheng East Road, Chaoyang District, Beijing and encounters a roadblock, at 10:10:40 a.m., March 15, 2015. The location of the roadblock is acquired as: intersection between Anding Road and North Tucheng East Road, Chaoyang District, Beijing, and the time instant when the vehicle is traveling at the location of the roadblock is acquired as: 10:10:40 a.m., March 15, 2015.

In step S202, roadblock data at the roadblock time instant is acquired, the roadblock data containing at least one of image data within a first preset time period before the roadblock time instant and image data within a second preset time period after the roadblock time instant.

The image data includes video data, picture data, etc. Nowadays, many vehicles are equipped with tachographs and on-board radar systems. Wherein, a tachograph can acquire a video in front of the vehicle, and an on-board radar system can acquire a video behind the vehicle in backward traveling. The navigation terminal can be connected to an access interface of a tachograph to acquire video data or image data in front of the vehicle at a preset time before and after the vehicle is traveling at a location of a roadblock. In addition, the navigation terminal can be connected to an access interface of an on-board radar system to acquire video data or image data behind the vehicle in backward traveling within a preset time period before and after the vehicle is traveling at a location of a roadblock. Wherein, image data can be one or more frames of video data.

For example, when a vehicle is traveling forward and encounters a roadblock, video data or image data in front of the vehicle within a first preset time period, for example 10 seconds, before the roadblock time instant, and video data or image data in front of the vehicle within a second preset time period, for example 5 seconds, after the roadblock time instant are acquired through a tachograph.

Alternatively, when the vehicle is traveling backward and encounters a roadblock, video data or image data behind the vehicle within a first preset time period, for example 10 seconds, before the roadblock time instant, and video data or image data behind the vehicle within a second preset time period, for example 5 seconds, after the roadblock time instant are acquired through an on-board radar system.

In step S203, the roadblock data is sent to the preset server.

In the present embodiment, image data before and after the vehicle is traveling at a location of a roadblock is sent to the preset server, for the server to not only record a preset roadblock location but also store video data or image data of the preset roadblock location.

Therefore, the situation of the roadblock location and the ambient environment of the roadblock location can be intuitively learned about through the video data of the roadblock location which is stored in the preset server.

Since variation amount of a preset blocking parameter such as vibration amplitude of the vehicle is closely related to the traveling speed of the vehicle, when a vehicle is traveling at a high speed, a small unevenness of a road surface can significantly influence the variation amount of the preset blocking parameter of the vehicle. In this regard, in another embodiment of the present disclosure, according to the roadblock time instant acquired in step S201 in the above embodiments, a traveling speed of the vehicle can also be acquired. As shown in Fig. 4, the process of acquiring a traveling speed of the vehicle can include the following steps.

In step S301, a traveling distance of the vehicle within the first preset time period before the roadblock time instant is acquired, and a traveling distance of the vehicle within the second preset time period after the roadblock time instant is acquired.

For example, the roadblock time instant is 10:10:40, the first preset time period is set as 10 seconds before the roadblock time instant. Then, the starting point of the first preset time period is 10:10:30, and a traveling location of the vehicle at the starting point of the first preset time period is acquired, that is, the traveling location of the vehicle at 10:10:30. A linear distance between the traveling location and the roadblock location is calculated and taken as the traveling distance of the vehicle within the first preset time period.

Similarly, a finishing point of the second time period after the roadblock time instant is acquired, and the traveling location of the vehicle at the finishing point is acquired. Then, a linear distance between the roadblock location and the traveling location is calculated and taken as the traveling distance of the vehicle within the second preset time period.

In step S302, based on the first preset time period and the traveling distance of the vehicle within the first preset time period, the traveling speed of the vehicle during the first preset time period is calculated, and based on the second preset time period and the traveling distance of the vehicle within the second preset time period, the traveling speed of the vehicle during the second preset time period is calculated.

Information about a roadblock can be acquired more accurately by acquiring traveling speeds of the vehicle before and after the preset roadblock location and combining them with the variation amount of the preset blocking parameter of the vehicle. For example, when the vehicle is traveling at a high speed, even a small convex in a road surface such as a speed hump will bring a significant bump to the vehicle such that the variation amount of the vibration amplitude of the vehicle increases dramatically and exceeds the preset range corresponding to the variation amount of the vibration amplitude of the vehicle.

When the vehicle is traveling at a low speed, the same speed hump will not bring a bump to the vehicle, and the variation amount of the vibration amplitude of the vehicle increases by a small quantity, and probably won't exceed the preset range corresponding to the variation amount of the vibration amplitude of the vehicle. Thereby, the practical situation about the roadblock can be acquired more accurately by acquiring traveling speeds of the vehicle before and after the preset roadblock time instant.

In the present embodiment, a traveling speed of the vehicle at a roadblock location is acquired to further learn about the degree to which the roadblock blocks the normal traveling of the vehicle. Therefore, a practical situation of the roadblock can be accurately acquired according to traveling speeds before and after the vehicle at the roadblock location and motion parameters of the vehicle in combination.

Since a vehicle sometimes travels on a non-road surface on which objects that can bring bumps to the vehicle exist, such as steps, when a vehicle travels on an uneven non-road surface, the variation amount of the preset blocking parameter of the vehicle will probably exceed the preset range. If the current location of the vehicle on a non-road surface is sent to the preset server, the preset server will record the current location as a roadblock location.

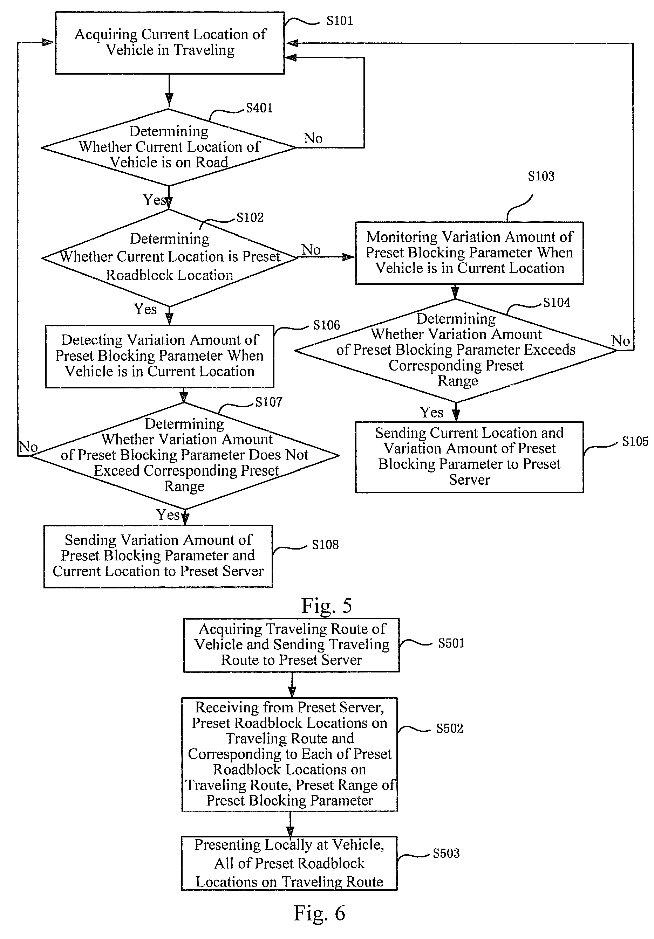

However, when the roadblock location is on a non-road surface, storing a roadblock location on a non-road surface in the preset server is meaningless for alarming drivers. In this regard, the preset server should not generally record a roadblock location on a non-road surface. In another embodiment of the present disclosure, before the above step S102, that is, before it is determined whether the current location of the vehicle is a preset roadblock location, as shown in Fig. 5, the method also includes the following steps.

In step S401, it is determined whether the current location of the vehicle is on a road.

The preset server contains information about all of the roads, including latitude and longitude coordinates of the location of the roads. The latitude and longitude coordinates of the roads are coordinate points which constitute coordinate ranges of the roads.

The current location of the vehicle is sent to the preset server. The preset server determines whether latitude and longitude coordinates of the current location of the vehicle are within a coordinate range of a road. If the latitude and longitude coordinates of the current location of the vehicle belong to a coordinate range of a road, the preset server sends to the navigation terminal of the vehicle a message that it is determined that the roadblock location is on a road, and the navigation terminal of the vehicle can determine that the current location of the vehicle is on a road based on the message. If the latitude and longitude coordinates of the current location of the vehicle do not belong to a coordinate range of a road, the preset server sends to the navigation terminal of the vehicle a message that it is determined that the roadblock location is on a non-road surface, and the navigation terminal of the vehicle can determine that the current location of the vehicle is on a non-road surface based on the message.

Alternatively, the navigation terminal downloads information about all of the roads in advance, and it can determine whether the current location of the vehicle is on a road through the above process.

If the current location of the vehicle is on a road, it can be determined that the roadblock location is on a road surface, and the process turns to step S102. If the current location of the vehicle is not on a road, for example, the vehicle may be traveling on a side pavement or traveling on a floor with steps, the variation amount of the preset blocking parameter of the vehicle will probably exceed the corresponding preset range. While in this case, the current location of the vehicle cannot be considered as a roadblock location. Therefore, the process turns to step S101, to acquire again a current location of the vehicle in traveling.

In the present embodiment, by confirming whether the roadblock location is on a road, it can avoid the situation where a non-road location is considered as a roadblock location on a road due to its influence on the variation amount of the preset blocking parameter, and it can ensure validity and accuracy of the information about the roadblock location received by the preset server.

In the above embodiments, the vehicle can acquire a preset roadblock location from the preset server. However, since the preset server does not know about the traveling route of the vehicle, the server will probably send to the vehicle all of the preset roadblock locations within a range about the location of the vehicle. In this regard, in another embodiment of the present disclosure, as shown in Fig. 6, the method also includes the following steps.

In step S501, a traveling route of the vehicle is acquired and the traveling route is sent to the preset server.

When the user sets a destination of the vehicle with the navigation terminal, the navigation terminal will plan a traveling route for the vehicle according to the current location of the vehicle and the destination of the vehicle. For example, assuming that the current location of the user is Peking University, and the destination is China Agricultural University, the navigation terminal can plan for the user a traveling route from Peking University to China Agricultural University, which starts from Peking University, through some roads, and arrives at China Agricultural University. Moreover, the traveling route can be displayed as overlapping with the map on the navigation terminal.

The traveling route is sent to the preset server. The traveling route can be a form of latitude and longitude coordinates of a plurality of coordinate points on the traveling route, such that the preset server can further recover the same traveling route based on these latitude and longitude coordinates or can perform other operations directly with these latitude and longitude coordinates, for example, determining whether a preset roadblock location which is stored in the preset server is on the traveling route.

In step S502, it is received from the preset server, preset roadblock locations on the traveling route and corresponding to each of the preset roadblock locations on the traveling route, a preset range of a preset blocking parameter.

After the preset server receives the traveling route from the vehicle, the server can determine whether a stored preset roadblock location is on the traveling route and send to the vehicle all of the preset roadblock locations on the traveling route and corresponding to each of the preset roadblock locations on the traveling route, a preset range of a preset blocking parameter, such that the variation amount of the preset blocking parameter can be compared with the preset range.

In step S503, all of the preset roadblock locations on the traveling route are presented locally at the vehicle.

When the vehicle receives a preset roadblock location and a variation amount of the preset blocking parameter, the received information can be informed locally at the vehicle in a form of voice broadcast, such that the driver can make response to the preset roadblock location in advance based on the information sent from the terminal. For example, before he is approaching a preset roadblock location, the driver can slow down or bypass it.

In the present embodiment, the traveling route of the vehicle is acquired and the traveling route is sent to the preset server, thereby, the preset roadblock locations on the traveling route can be received from the preset server. In this way, the preset server can send preset roadblock locations and other related information to the vehicle.

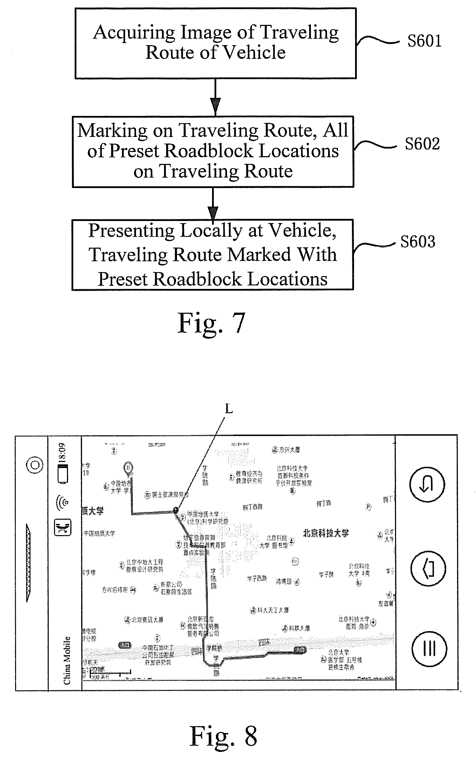

In the above step S503, when the vehicle receives a preset roadblock location and a variation amount of the preset blocking parameter, the preset roadblock location can also be directly informed to the vehicle through the display screen of the terminal. In another embodiment of the present disclosure, as shown in Fig. 7, the method can include the following steps.

In step S601, the traveling route of the vehicle is acquired.

According to the acquired traveling route of the vehicle in the above step S502, the traveling route and images of the traveling route in the navigation terminal are acquired. The images of the traveling route can be stored in the navigation terminal in advance, or can be downloaded from the preset server, which can include information such as images of roads involved in the traveling route and the ambient buildings. In addition, with the traveling of the vehicle, the images of the traveling route will be updated, such that the driver can view the images of the traveling route which always corresponds to the current location of the vehicle and the current road and ambient environment.

In step S602, all of the preset roadblock locations on the traveling route are marked on the traveling route.

As shown in Fig. 8, after the preset roadblock location L is acquired, the preset roadblock location L is directly marked on the traveling route according to the latitude and longitude coordinates of the preset roadblock location L and highlighted on the image of the traveling route with a prompting bubble or a prompting pattern.

In step S603, the traveling route marked with the preset roadblock locations is presented locally at the vehicle.

The traveling route marked with the preset roadblock locations is displayed on the display screen of the navigation terminal. Moreover, as the vehicle approaches a preset roadblock location, the navigation terminal will issue a voice warning. In addition, when the vehicle is close enough to a preset roadblock location, on the display screen of the navigation terminal, information about the preset roadblock location can be directly observed on the traveling route, to prompt the driver to take actions in advance.

In the above embodiments, although the vehicle can acquire a preset roadblock location, the vehicle cannot learn about the practical situation and the ambient environment of the roadblock in advance, therefore, the driver can only select to either proceed or bypass, and cannot make precise judgment according to the situation of the roadblock, which is not convenient. In this regard, in another embodiment of the present disclosure, as shown in Fig. 8, the method also includes the following steps.

In step S701, it is received from a user an inquiry request for inquiring about a preset roadblock location on the traveling route.

After the navigation terminal of the vehicle receives a preset roadblock location which is sent by the preset server according to the traveling route of the vehicle, the user can set a preset roadblock location on the traveling route as a selected preset roadblock location, and perform inquiring operation on the preset roadblock location.

For example, the user can click to select a preset roadblock location on the display screen of the navigation terminal. At this time, the navigation terminal can prompt the user whether to inquire about more information about the preset roadblock location. If the user selects to view more information, an inquiring operation is triggered to issue an inquiry request.

In step S702, the inquiry request is sent to the preset server

The inquiry request in step S701 is sent to the preset server. According to the inquiry request, the preset server finds a locally stored record which corresponds to the preset roadblock location, and inquires about roadblock data about the preset roadblock location. The roadblock data includes video data, image data, audio data and the like at the preset roadblock location.

The preset server sends the resulting information to the navigation terminal which issues the inquiry request.

In step S703, it is received roadblock data of the preset roadblock location which is searched out by the preset server based on the inquiry request.

In the above embodiments, when the vehicle encounters a roadblock, if the roadblock is not recorded in the preset server, it means that the roadblock is a newly found roadblock or a roadblock which has not been encountered by any other vehicle. The vehicle sends the roadblock location to the preset server and sends the video data or image data of the roadblock acquired by the vehicle to the preset server.

After another vehicle issues to the preset server an inquiry request for inquiring roadblock data of a preset roadblock location, the vehicle can receive an inquiring result from the preset server. The inquiring result is roadblock data of the roadblock location which at least includes video data or image data of the roadblock, or can include a traveling speed of the vehicle at the preset roadblock location as illustrated in the above embodiments, or a voice notice provided by a driver to the preset server.

In step S704, the roadblock data of the preset roadblock location is presented.

After the vehicle receives the roadblock data of the preset roadblock location, the roadblock data of the preset roadblock location can be presented on the display screen of the terminal. For example, the video data or the image data of the roadblock is played, the voice message is broadcast, or a text message is displayed, and so on. The roadblock data of the preset roadblock can be presented manually by the user or automatically by the terminal.

In the present embodiment, by sending roadblock data of a preset roadblock to a vehicle, the driver can clearly acquire practical situation about a roadblock he encounters. Thereby, the driver can make an accurate judgment about the roadblock and can timely modify the traveling route or slow down.

In the above embodiments, a method for processing traffic data which is applied in a vehicle is described. Generally, there are two situations. In one situation, a vehicle is traveling on a road, if it travels at a roadblock location which is not recorded in a preset server and a variation amount of a preset blocking parameter exceeds a preset range, the current location of the vehicle, that is the location of the roadblock, the variation amount of the preset blocking parameter of the vehicle at the current location and various roadblock data related to the location of the roadblock are sent to the preset server. Thereby, any other vehicle can learn about the location of the roadblock and the practical situation of the location of the roadblock before it travels to the location.

In another situation, when a vehicle is traveling on a road, if the vehicle acquires information about that a roadblock location exists on its traveling route in advance, when the vehicle is travelling to the roadblock location, it is detected whether a variation amount of a preset blocking parameter of the vehicle at the roadblock location exceeds a preset range. If it exceeds the preset range, it means that the roadblock which will influence a vehicle still exists, the roadblock location is kept without any operation. If it does not exceed the preset range, it means that the roadblock which will not influence a vehicle, the location of the roadblock and the variation amount of the preset blocking parameter of the vehicle at the roadblock location are sent to the preset server, for the server to learn about that the roadblock has been cleared off. When any other vehicle passes this location, the server will not send information that this location is a roadblock location.

Of the above two situations, one is sending information about a new roadblock to the preset server, the other is sending information to the preset server that a roadblock has been cleared off, for the preset server to record the most accurate information about the roadblock.

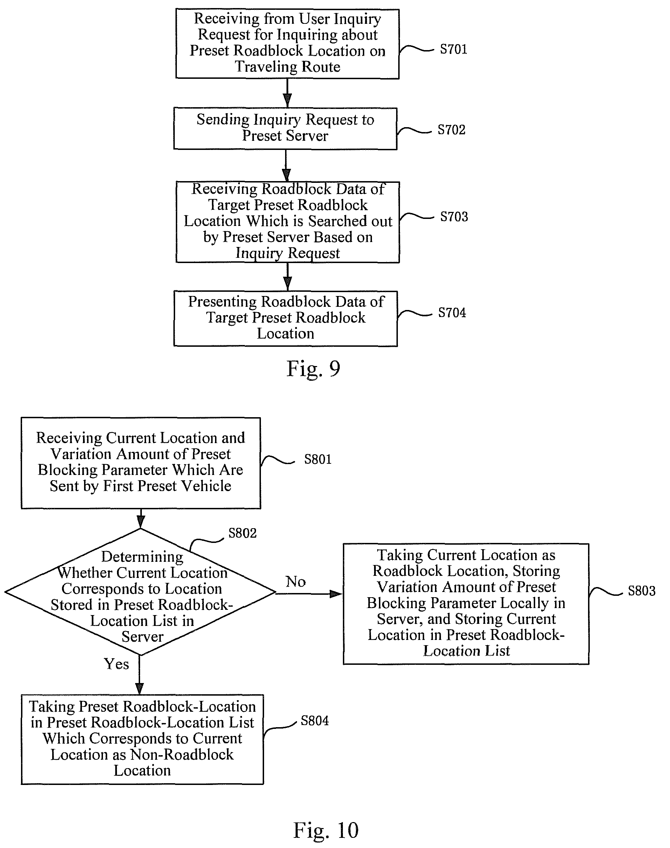

Fig. 10 is a flow chart illustrating a method for processing traffic data according to still another exemplary embodiment, which is applied in a preset server. As shown in Fig. 10, the method includes the following steps.

In step S801, it is received a current location and a variation amount of a preset blocking parameter which are sent by a first preset vehicle.

As described in the above embodiments, the first preset vehicle will send to the preset server a current location and a variation amount of a preset blocking parameter, and the preset server receives these data which are sent by the first preset vehicle.

In step S802, it is determined whether the current location corresponds to a location stored in a preset roadblock-location list in the preset server.

The preset server stores locally roadblock locations and vehicle data of the first preset vehicle when it is at the roadblock locations. These data are previously acquired data or can be data previously acquired by other terminals. For example, as described in the above embodiments, when the first preset vehicle travels to a roadblock location which is not recorded in the preset server, the new roadblock location is sent to the preset server for the preset server to locally store the new roadblock location. Wherein, the preset server locally stores a preset roadblock-location list which contains all of the roadblock locations stored by the preset server and access paths of related data corresponding to each of the roadblock locations.

When the preset server receives from the first preset vehicle the current location and the vehicle data when the first preset vehicle is at the location, the preset server compares the current location of the first preset vehicle with each roadblock location in the preset roadblock-location list locally stored in the preset server, and determines whether the current location sent from the terminal corresponds to a roadblock location in the preset roadblock-location list.

Herein, corresponding to means that the two locations are the same, or a distance between the two locations is within a preset range. For example, the preset roadblock-location list contains a roadblock location which is at a southeast corner of an intersection of road A and road B, and the roadblock location sent by the first preset vehicle to the preset server is 1 meter south to the southeast corner of an intersection of road A and road B, it can be considered that the two locations correspond to each other.

In step S803, when the current location does not correspond to a location stored in the preset roadblock-location list in the preset server, the current location is taken as a roadblock location, the variation amount of the preset blocking parameter is stored locally in the preset server, and the current location is stored in the preset roadblock-location list.

When the current location sent by the first preset vehicle does not correspond to a location stored in the preset roadblock-location list locally in the preset server, the current location sent by the first preset vehicle is marked as a roadblock location and stored in the preset roadblock-location list locally in the preset server. Moreover, the variation amount of the preset parameter is locally stored in the preset server. If the first preset vehicle also sends other roadblock data related to this location, the roadblock data are locally stored in the preset server as well.

The roadblock location is stored as corresponding to the related roadblock data, such that when the roadblock location is acquired, all of the roadblock data related to this roadblock location can be directly acquired.

In an embodiment, the method for processing traffic data also includes: sending the current location as a preset roadblock location to a second preset vehicle.

When the second preset vehicle sends a traveling route to the preset server, the current location sent by the first preset vehicle is sent to the second preset vehicle as a preset roadblock location.

In the present embodiment, the preset server receives from the vehicle the current location and the variation amount of the preset blocking parameter at the current location, and compares the current location sent by the vehicle with the preset roadblock-location list in the preset server. If the current location sent by the vehicle corresponds to a location stored in the preset roadblock-location list locally in the preset server, the server updates the data related to the corresponding roadblock which is previously stored locally in the preset server with the data related to the roadblock which is sent by the vehicle.

If the current location sent by the vehicle does not correspond to a location stored in the preset roadblock-location list locally in the preset server, the data related to the roadblock which is sent by the vehicle is stored locally in the preset server as new data. Data related to a roadblock stored locally in the sever can be sent to a vehicle on a traveling route on which the roadblock exists.

Through the present embodiment, it can acquire most recent information about roadblocks in real time, and information about roadblocks can be updated in real time. Thereby, it can ensure the accuracy of the roadblock locations and other related data stored in the preset server, and thus it can ensure the accuracy of the information sent by the preset server to vehicles.

In another embodiment of the present disclosure, as shown in Fig. 10, the method also includes the following steps.

When the location corresponds to a location stored in the preset roadblock-location list, in step S804, the location in the preset roadblock-location list which corresponds to the current location is determined as a non-roadblock location.

When the location corresponds to a location stored in the preset roadblock-location list locally in the preset server, it means that the current location of the first preset vehicle which sends information to the preset server is a roadblock location already recorded in the preset server. Then, only when the variation amount of the preset blocking parameter of the first preset vehicle at the location does not exceed the preset range, that is, the first preset vehicle does not encounter a roadblock at this location, the location and the variation amount of the preset blocking parameter when the first preset vehicle is at this location are sent to the preset server.

Therefore, when it can be determined that the current location sent by the first preset vehicle corresponds to a location stored in a preset roadblock-location list locally in the preset server, the roadblock at the roadblock location stored locally in the preset server has been cleared off practically in the road.

Therefore, the preset server can determine the location in the preset roadblock-location list locally in the preset server which corresponds to the current location, as a non-roadblock location, and store the current location and the variation amount of the preset blocking parameter at the current location which are sent by the first preset vehicle and other related data. When a non-roadblock location exists in the preset server, the preset server can delete all the data related to the location, saving storage resources of the preset server.

For example, the preset roadblock-location list locally in the preset server contains a roadblock location which is a southeast corner of an intersection of a road A and a road B, and the acquired variation amount of vibration amplitude of the vehicle at the roadblock location is 50. The current location sent by the vehicle to the preset server is 1 meter south to the southeast corner of the intersection of the road A and the road B, the acquired variation amount of vibration amplitude of the vehicle at the location is 10, and the preset range of the variation amount of vibration amplitude of the vehicle is [10, 20].

Thus, it can be seen that the variation amount of vibration amplitude of the vehicle at the location does not exceed the preset range. The current location and the variation amount of vibration amplitude of the vehicle at the location and other data which are sent by the vehicle are stored. Thereby, the information about the roadblock location stored in the preset server is updated.

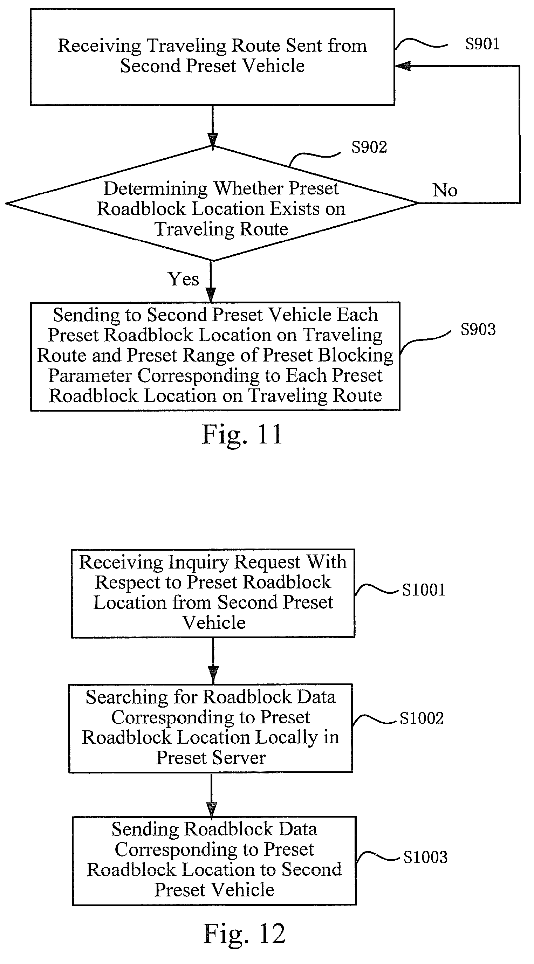

In the above embodiments, the preset server can send data related to a roadblock to a second preset vehicle. However, the preset server does not know which related data of the roadblock should be sent to the second preset vehicle. In this regard, in another embodiment of the present disclosure, as shown in Fig. 11, the method also includes the following steps.

In step S901, a traveling route of the second preset vehicle is received.

As described in the above embodiments, after it acquires a traveling route of the second preset vehicle, the second preset vehicle sends the traveling route to the preset server, and the preset server receives the traveling route sent by the second preset vehicle.

In step S902, it is determined whether a preset roadblock location exists on the traveling route of the vehicle.

After it receives the traveling route sent by the second preset vehicle, the preset server compares the traveling route with each of the roadblock locations stored in the preset roadblock-location list in the preset server. As described in the above embodiments, when a roadblock location exists on the traveling route, that is, when a roadblock location is cross the traveling route, it can be determined that the traveling route of the second preset vehicle contains a preset roadblock location.

In step S903, if a preset roadblock location exists on the traveling route of the second preset vehicle, each preset roadblock location on the traveling route and a preset range of a preset blocking parameter corresponding to each of the preset roadblock locations are sent to the second preset vehicle.

If a preset roadblock location exists on the traveling route, the preset server locally acquires a preset range of a preset blocking parameter corresponding to the preset roadblock location and other data related to the preset roadblock location. Moreover, these data are sent to the second preset vehicle, for the second preset vehicle to prompt the driver according to the acquired preset roadblock locations and other data such that the driver can response before he travels to the preset roadblock location.

In the present embodiment, a traveling route of a vehicle is received, and it is determined whether a preset roadblock location exists ahead of the vehicle based on the traveling route. When it is determined that a preset roadblock location exists, the preset roadblock location and other related data are sent to the vehicle, for the driver to response before he travels to the preset roadblock location in advance, such as avoiding the roadblock location or lowering the traveling speed.

In the above embodiments, the vehicle acquires roadblock data and sends it to the server. Therefore, in another embodiment of the present disclosure, the method also includes the following steps.
11) Roadblock data sent from the first preset vehicle is received, and the roadblock data at least contains image data of the roadblock location.

The first preset vehicle acquires roadblock data when the first preset vehicle is at the preset roadblock location. The roadblock data at least includes image data of the roadblock location, and can also include the traveling speed when the first preset vehicle is at the preset roadblock location, and a voice notice of a driver regarding the preset roadblock location. The first preset vehicle sends these roadblock data to the server, and the server receives these roadblock data.
12) The roadblock data is stored locally in the server and is sent to a second preset vehicle.

The server stores the received roadblock data locally in the server, and stores the roadblock data as corresponding to a respective preset roadblock location. When a second preset vehicle requests the roadblock data, the roadblock data can be sent to the second preset vehicle.

In the above embodiments, the vehicle sends an inquiry request to the server. Therefore, in another embodiment of the present disclosure, the method also includes the following steps, as shown in Fig. 12.

In step S1001, an inquiry request with respect to a preset roadblock location is received from the second preset vehicle.

The inquiry request carries the preset roadblock location, and the preset server receives the inquiry request from the second preset vehicle, and the process turns to step S1002.

In step S1002, roadblock data corresponding to the preset roadblock location is searched for locally in the preset server.

After it receives the inquiry request which carries the preset roadblock location, the preset server searches the preset roadblock-location list for a roadblock location record corresponding to the preset roadblock location. In addition, the preset server locally searches roadblock data corresponding to the roadblock location.

In step S1003, roadblock data corresponding to the preset roadblock location is sent to the second preset vehicle.

In the embodiments of the present disclosure, the first preset vehicle and the second preset vehicle can be the same vehicle.

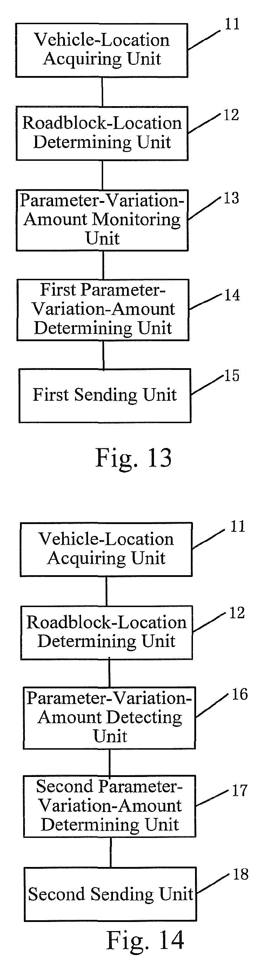

Fig. 13 is a block diagram of a device for processing traffic data according to an exemplary embodiment. As shown in Fig. 13, the device includes: a vehicle-location acquiring unit 11, a roadblock-location determining unit 12, a parameter-variation-amount monitoring unit 13, a first parameter-variation-amount determining unit 14 and a first sending unit 15.

The vehicle-location acquiring unit 11 is configured to acquire a current location of a vehicle in traveling;
the roadblock-location determining unit 12 is configured to determine whether the current location is a preset roadblock location;
the parameter-variation-amount monitoring unit 13 is configured to, if the current location is not a preset roadblock location, monitor a variation amount of a preset blocking parameter when the vehicle is in the current location;
the first parameter-variation-amount determining unit 14 is configured to determine whether the variation amount of the preset blocking parameter exceeds a corresponding preset range; and
the first sending unit 15 is configured to, when the variation amount of the preset blocking parameter exceeds the preset range, send the current location and the variation amount of the preset blocking parameter to a preset server.

In another embodiment of the present disclosure, the device further includes: a roadblock-time-instant acquiring unit, a roadblock-data acquiring unit and a roadblock-data sending unit.

The roadblock-time-instant acquiring unit is configured to, when the current location is not a preset roadblock location and the variation amount of the preset blocking parameter exceeds the corresponding preset range, take a time instant at which the vehicle is in the current location as a roadblock time instant;
the roadblock-data acquiring unit is configured to acquire roadblock data at the roadblock time instant, the roadblock data containing at least one of image data within a first preset time period before the roadblock time instant and image data within a second preset time period after the roadblock time instant; and
the roadblock-data sending unit is configured to send the roadblock data to the preset server.

In another embodiment of the present disclosure, as shown in Fig. 14, the device further includes: a parameter-variation-amount detecting unit 16, a second parameter-variation-amount determining unit 17 and a sending unit 18.

The parameter-variation-amount detecting unit 16, connected with the roadblock-location determining unit 12, is configured to, if the current location is a preset roadblock location, detect a variation amount of a preset blocking parameter when the vehicle is in the current location;
the second parameter-variation-amount determining unit 17 is configured to detect whether the variation amount of the preset blocking parameter does not exceed the corresponding preset range; and
the second sending unit 18 is configured to, when the variation amount of the preset blocking parameter does not exceed the corresponding preset range, send the variation amount of the preset blocking parameter and the current location to the preset server.

In another embodiment of the present disclosure, the device further includes: a traveling-route acquiring unit, a roadblock-location receiving unit and a presenting unit.

The traveling-route acquiring unit is configured to acquire a traveling route of the vehicle and send the traveling route to the preset server;
the roadblock-location receiving unit is configured to receive from the preset server, preset roadblock locations on the traveling route and corresponding to each of the preset roadblock locations on the traveling route, a preset range of a preset blocking parameter; and
the presenting unit is configured to present locally at the vehicle, all of the preset roadblock locations on the traveling route.

In another embodiment of the present disclosure, the presenting unit further includes: a traveling-route acquiring sub-unit, a traveling-route marking sub-unit and a traveling-route presenting sub-unit.

The traveling-route acquiring sub-unit is configured to acquire the traveling route of the vehicle;
the traveling-route marking sub-unit is configured to mark on the traveling route, all of the preset roadblock locations on the traveling route; and
the traveling-route presenting sub-unit is configured to present locally at the vehicle, the traveling route marked with the preset roadblock locations.

In another embodiment of the present disclosure, the device further includes: a roadblock inquiring unit, an inquiry-request sending unit, a roadblock-data receiving unit and a roadblock-data presenting unit.

The roadblock inquiring unit is configured to receive from a user an inquiry request for inquiring about a preset roadblock location on the traveling route;
the inquiry-request sending unit is configured to send the inquiry request to the preset server;
the roadblock-data receiving unit is configured to receive roadblock data of the preset roadblock location which is searched out by the preset server based on the inquiry request; and
the roadblock-data presenting unit is configured to present the roadblock data of the preset roadblock location.

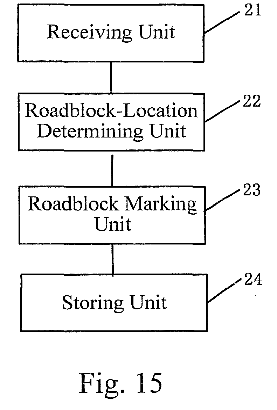

Fig. 15 is a block diagram of a server according to an exemplary embodiment. As shown in Fig. 15, the server includes: a receiving unit 21, a roadblock-location determining unit 22, a roadblock marking unit 23 and a storing unit 24.

The receiving unit 21 is configured to receive a current location and a variation amount of a preset blocking parameter which are sent by a first preset vehicle;
the roadblock-location determining unit 22 is configured to determine whether the current location corresponds to a location stored in a preset roadblock-location list in the server;
the roadblock marking unit 23 is configured to, when the current location does not correspond to a location stored in the preset roadblock-location list, take the current location as a roadblock location; and
the storing unit 24 is configured to store the variation amount of the preset blocking parameter locally in the server, and store the current location in the preset roadblock-location list. In an embodiment, the server further includes a sending unit, wherein the sending unit is configured to send the current location as a preset roadblock location to the second preset vehicle.

In another embodiment of the present disclosure, the server further includes: a non-roadblock-location marking unit.

The non-roadblock-location marking unit is configured to, when the current location corresponds to a location stored in the preset roadblock-location list, take the preset roadblock-location in the preset roadblock-location list which corresponds to the current location as a non-roadblock location.

In another embodiment of the present disclosure, the server further includes: a traveling-route receiving unit, a roadblock-location determining unit and a roadblock-location sending unit.

The traveling-route receiving unit is configured to receive a traveling route sent from a second preset vehicle;
the roadblock-location determining unit is configured to determine whether a preset roadblock location exists on the traveling route; and
the roadblock-location sending unit is configured to, if a preset roadblock location exists on the traveling route, send to the second preset vehicle each preset roadblock location on the traveling route and a preset range of a preset blocking parameter corresponding to each preset roadblock location on the traveling route.

In another embodiment of the present disclosure, the server further includes: a roadblock-data receiving unit and a roadblock-data storing unit.

The roadblock-data receiving unit is configured to, when the current location is taken as a roadblock location, receive roadblock data of the roadblock location from the first preset vehicle, the roadblock data at least containing image data of the roadblock location; and
the roadblock-data storing unit is configured to store the roadblock data locally in the server.

In another embodiment of the present disclosure, the server further includes: an inquiry-request receiving unit and a roadblock-data searching unit and a roadblock-data sending unit.

The inquiry-request receiving unit is configured to receive an inquiry request with respect to a preset roadblock location from a second preset vehicle;
the roadblock-data searching unit is configured to search for roadblock data corresponding to the preset roadblock location locally in the server; and
the roadblock-data sending unit is configured to send the roadblock data corresponding to the preset roadblock location to the second preset vehicle.

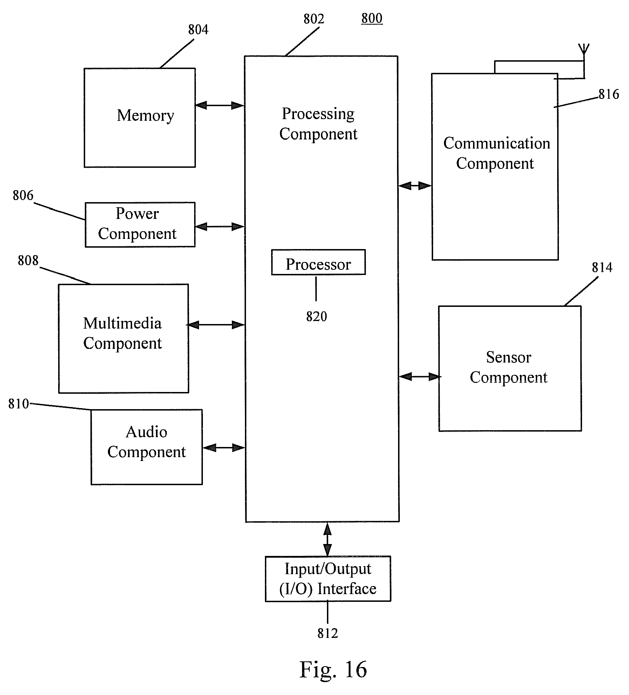

Fig. 16 is a block diagram of a terminal 800 according to an exemplary embodiment. For example, the terminal may be a mobile phone, a computer, a digital broadcast terminal, a messaging device, a gaming console, a tablet, a medical device, exercise equipment, a personal digital assistant, and the like.

Referring to Fig. 16, the mobile terminal may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the mobile terminal, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the mobile terminal. Examples of such data include instructions for any applications or methods operated on the mobile terminal, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the mobile terminal. The power component 806 may include a power management system, one or more power sources, and any other components associated with the generation, management, and distribution of power in the mobile terminal.

The multimedia component 808 includes a screen providing an output interface between the mobile terminal and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the mobile terminal is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the mobile terminal is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the mobile terminal. For instance, the sensor component 814 may detect an open/closed status of the mobile terminal, relative positioning of components, e.g., the display and the keypad, of the mobile terminal, a change in position of the mobile terminal or a component of the mobile terminal, a presence or absence of user contact with the mobile terminal, an orientation or an acceleration/deceleration of the mobile terminal, and a change in temperature of the mobile terminal. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the mobile terminal and other devices. The mobile terminal can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the mobile terminal may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the mobile terminal, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by the processor of the terminal, the terminal is caused to perform the method for processing traffic data. The method includes:
acquiring a current location of a vehicle in traveling;
determining whether the current location of the vehicle is a preset roadblock location;
if the current location of the vehicle is not a preset roadblock location, monitoring a variation amount of a preset blocking parameter when the vehicle is in the current location and determining whether the variation amount of the preset blocking parameter exceeds a corresponding preset range; and
when the variation amount of the preset blocking parameter exceeds the preset range, sending the current location and the variation amount of the preset blocking parameter to a preset server.

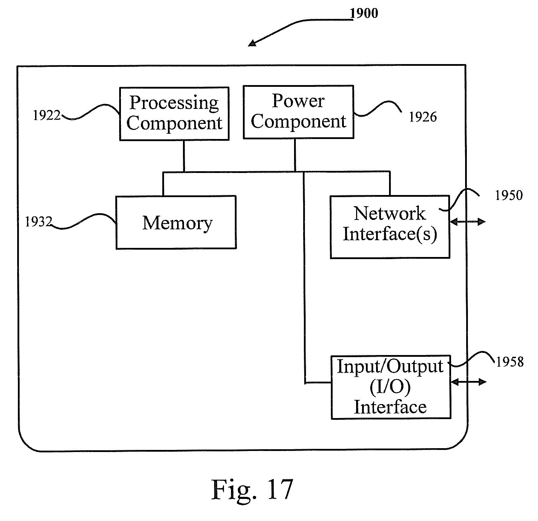

Fig. 17 is a block diagram of a server 1900 according to an exemplary embodiment. For example, the server 1900 may be provided as a server. Referring to Fig. 17, the server 1900 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions.

The server 1900 may also include a power component 1926 configured to perform power management of the server 1900, wired or wireless network interface(s) 1950 configured to connect the server 1900 to a network, and an input/output (I/O) interface 1958. The server 1900 may operate based on an operating system stored in the memory 1932, such as Windows ServerTM, Mac OS XTM, UnixTM, LinuxTM, FreeBSDTM, or the like.

A non-transitory computer readable storage medium, when instructions in the storage medium are executed by the processor of the server, the server is caused to perform the method for processing traffic data. The method includes:
receiving a current location and a variation amount of a preset blocking parameter which are sent by a first preset vehicle;
determining whether the current location corresponds to a location stored in a preset roadblock-location list in the server; and
when the current location does not correspond to a location stored in the preset roadblock-location list, taking the current location as a roadblock location, storing the variation amount of the preset blocking parameter locally in the server, and storing the current location in the preset roadblock-location list.

It should be noted that, as used herein, relation terms such as "first" and "second" are used merely to distinguish a subject or an operation from another subject or another operation, and not to require or imply any substantial relation or order between these subjects or operations. Moreover, terms "include", "contain" or any variation thereof are intended to cover an nonexclusive containing, such that a process, a method, an item or a device containing a series of elements not only includes these elements, but also includes other elements that are not set forth specifically, or also includes an inherent element of such a process, method, item or device. Without further limitation, an element defined by a phrase "include a" dos not mean that other elements are excluded from the process, method, item or device including the same element.

## Claims

1. A method for processing traffic data, which is applied in a terminal, the method comprising:
acquiring (101) a current location of a vehicle in traveling;
determining (102) whether the current location is a preset roadblock location;
if the current location is not a preset roadblock location, monitoring (103) a variation amount of a preset blocking parameter when the vehicle is in the current location and determining (104) whether the variation amount of the preset blocking parameter exceeds a corresponding preset range; and
when the variation amount of the preset blocking parameter exceeds the preset range, sending (105) the current location and the variation amount of the preset blocking parameter to a preset server.

2. The method of claim 1, wherein the method further comprises:
when the current location is not a preset roadblock location and the variation amount of the preset blocking parameter exceeds the corresponding preset range, taking (201) a time instant at which the vehicle is in the current location as a roadblock time instant;
acquiring (202) roadblock data at the roadblock time instant, the roadblock data containing at least one of image data within a first preset time period before the roadblock time instant and image data within a second preset time period after the roadblock time instant; and
sending (203) the roadblock data to the preset server.

3. The method of claim 1 or 2, wherein the method further comprises:
if the current location is a preset roadblock location, detecting (106) a variation amount of a preset blocking parameter when the vehicle is in the current location and determining (107) whether the variation amount of the preset blocking parameter does not exceed the corresponding preset range; and
when the variation amount of the preset blocking parameter does not exceed the corresponding preset range, sending (108) the variation amount of the preset blocking parameter and the current location to the preset server.

4. The method of any one of claims 1-3, wherein the method further comprises:
acquiring (501) a traveling route of the vehicle and sending the traveling route to the preset server;
receiving (502) from the preset server, preset roadblock locations on the traveling route and corresponding to each of the preset roadblock locations on the traveling route, a preset range of a preset blocking parameter; and
presenting (503) locally at the vehicle, all of the preset roadblock locations on the traveling route.

5. The method of claim 4, wherein presenting locally at the vehicle, all of the preset roadblock locations on the traveling route comprises:
acquiring (601) the traveling route of the vehicle;
marking (602) on the traveling route, all of the preset roadblock locations on the traveling route; and
presenting (603) locally at the vehicle, the traveling route marked with the preset roadblock locations.

6. The method of claim 5, wherein the method further comprises:
receiving (701) from a user an inquiry request for inquiring about a preset roadblock location on the traveling route;
sending (702) the inquiry request to the preset server;
receiving (703) roadblock data of the preset roadblock location which is searched out by the preset server based on the inquiry request; and
presenting (704) the roadblock data of the preset roadblock location.

7. A method for processing traffic data, which is applied in a server, wherein the method comprises:
receiving (801) a current location and a variation amount of a preset blocking parameter which are sent by a first preset vehicle;
determining (802) whether the current location corresponds to a location stored in a preset roadblock-location list in a server; and
when the current location does not correspond to a location stored in the preset roadblock-location list, taking the current location as a roadblock location, storing (803) the variation amount of the preset blocking parameter locally in the server, and storing the current location in the preset roadblock-location list.

8. The method of claim 7, wherein the method further comprises:
receiving (901) a traveling route sent from a second preset vehicle;
determining (902) whether a preset roadblock location exists on the traveling route; and if a preset roadblock location exists on the traveling route, sending (903) to the second preset vehicle each preset roadblock location on the traveling route and a preset range of a preset blocking parameter corresponding to each preset roadblock location on the traveling route.

9. The method of claim 7 or 8, wherein the method further comprises:
when the current location corresponds to a location stored in the preset roadblock-location list, taking (804) the preset roadblock-location in the preset roadblock-location list which corresponds to the current location as a non-roadblock location.

10. The method of any one of claims 7 to 9, wherein the method further comprises:
when taking the current location as a roadblock location, receiving roadblock data of the roadblock location from the first preset vehicle, the roadblock data at least containing image data of the roadblock location; and
storing the roadblock data locally in the server.

11. The method of claim 10, wherein the method further comprises:
receiving (1001) an inquiry request with respect to a preset roadblock location from a second preset vehicle;
searching (1002) for roadblock data corresponding to the preset roadblock location locally in the server; and
sending (1003) the roadblock data corresponding to the preset roadblock location to the second preset vehicle.

12. The method of claims 8 or 11, wherein the first preset vehicle and the second preset vehicle are the same vehicle.

13. A terminal for processing traffic data, wherein the terminal comprises:
a vehicle-location acquiring unit (11) configured to acquire a current location of a vehicle in traveling;
a roadblock-location determining unit (12) configured to determine whether the current location is a preset roadblock location;
a parameter-variation-amount monitoring unit (13) configured to, if the current location is not a preset roadblock location, monitor a variation amount of a preset blocking parameter when the vehicle is in the current location;
a first parameter-variation-amount determining unit (14) configured to determine whether the variation amount of the preset blocking parameter exceeds a corresponding preset range; and
a first sending unit (15) configured to, when the variation amount of the preset blocking parameter exceeds the preset range, send the current location and the variation amount of the preset blocking parameter to a preset server.

14. The terminal of claim 13, wherein the terminal further comprises:
a parameter-variation-amount detecting unit (16) configured to, if the current location is a preset roadblock location, detect a variation amount of a preset blocking parameter when the vehicle is in the current location;
a second parameter-variation-amount determining unit (17) configured to detect whether the variation amount of the preset blocking parameter does not exceed the corresponding preset range; and
a second sending unit (18) configured to, when the variation amount of the preset blocking parameter does not exceed the corresponding preset range, send the variation amount of the preset blocking parameter and the current location to the preset server.

15. A server, wherein the server comprises:
a receiving unit (21) configured to receive a current location and a variation amount of a preset blocking parameter which are sent by a first preset vehicle;
a roadblock-location determining unit (22) configured to determine whether the current location corresponds to a location stored in a preset roadblock-location list in the server;
a roadblock marking unit (23) configured to, when the current location does not correspond to a location stored in the preset roadblock-location list, take the current location as a roadblock location; and
a storing unit (24) configured to store the variation amount of the preset blocking parameter locally in the server, and store the current location in the preset roadblock-location list.

16. A computer program including instructions for executing the steps of a method for processing traffic data according to any one of claims 1 to 12 when said program is executed by a computer.

17. A recording medium readable by a computer and having recorded thereon a computer program including instructions for executing the steps of a method for processing traffic data according to any one of claims 1 to 12
